**Europäisches Patentamt**

**European Patent Office**

**Office européen des brevets**

(19)

(11) Veröffentlichungsnummer : **0 412 311 B1**

(12)

# EUROPÄISCHE PATENTSCHRIFT

(45) Veröffentlichungstag der Patentschrift :
**13.05.92 Patentblatt 92/20**

(51) Int. Cl.⁵ : **G01C 19/72**

(21) Anmeldenummer : **90113351.2**

(22) Anmeldetag : **12.07.90**

(54) **Faserkreisel vom Sagnac-Typ.**

(30) Priorität : **09.08.89 DE 3926313**

(43) Veröffentlichungstag der Anmeldung :
**13.02.91 Patentblatt 91/07**

(45) Bekanntmachung des Hinweises auf die
Patenterteilung :
**13.05.92 Patentblatt 92/20**

(84) Benannte Vertragsstaaten :
**DE FR GB IT**

(56) Entgegenhaltungen :
**US-A- 4 440 498**
**US-A- 4 479 715**

(73) Patentinhaber : **Messerschmitt-Bölkow-Blohm
Gesellschaft mit beschränkter Haftung
Robert-Koch-Strasse
W-8012 Ottobrunn (DE)**

(72) Erfinder : **Jurga, Peter
Kastanienstrasse 7
W-8000 München 90 (DE)**
Erfinder : **Poisel, Hans, Dr.
Neustädter Strasse 6
W-8060 Dachau (DE)**
Erfinder : **Trommer, Gert, Dr.
Connollystrasse 16
W-8000 München 40 (DE)**

EP 0 412 311 B1

Jouve, 18, rue Saint-Denis, 75001 PARIS

## Beschreibung

Die Erfindung bezieht sich auf einen Faserkreisel gemäß dem Oberbegriff des Patentanspruches 1.

Ein solcher Faserkreisel ist aus der US-A-4 440 498 bekannt. Der Richtkoppler bei diesem Faserkreisel weist sechs Tore auf, die jeweils in Gruppen zu dreien zu beiden Seiten eines Koppelbereiches angeordnet sind. Der Koppelbereich kann hierbei durch Verpressen oder Sthmelzen aneinanderliegender Lichtleiterfasern erzeugt werden. Auf der einen Seite des Richtkopplers sind eine Lichtquelle und symmetrisch dazu zwei Empfängerdioden angeschlossen, auf der anderen Seite ist eine Faserspule aus einer langen Lichtleiterfaser an den äußeren Toren angeschlossen, wobei das mittlere, dem Anschluß für die Lichtquelle gegenüberliegende Tor frei bleibt und z.B. mit einer Überwachungsschaltung verbunden werden kann, in der Intensitätsschwankungen der Lichtquelle bestimmt und in den Meßergebnissen des Faserkreisels berücksichtigt werden.

Dieser bekannte Faserkreisel arbeitet durch die spezielle Ausgestaltung des Richtkopplers nahe des sog. Quadraturpunktes, in dem die Ausgangssignale der Empfängerdioden eine sinusförmige Abhängigkeit von der Sagnac-Phase aufweisen, so daß dieser Faserkreisel bei kleinen Drehraten eine maximale Empfindlichkeit aufweist.

Sonst übliche Faserkreisel, die mit (2 x 2)-Kopplern, d.h. mit Richtkopplern mit jeweils zwei Toren zu beiden Seiten des Koppelbereiches arbeiten, liefern Ausgangssignale, die vom Cosinus der Sagnac-Phase abhängen. Somit kann man nicht zwischen positivem und negativem Umlaufsinn des Kreisels unterscheiden. Um hier eine Empfindlichkeit für kleine Drehraten zu erhalten, muß z.B. durch Phasenmodulation an einem Ende der Faserspule eine nichtreziproke

Phasenverschiebung um pi/2 erzeugt werden, so daß aus der Cosinusabhängigkeit des Interferenzsignals eine Sinusabhängigkeit wird. Nachteilig bei einer solchen Lösung ist der notwendige zusätzliche Modulator, der z.B. piezomechanisch oder elektrooptisch arbeitet.

Der Erfindung liegt die Aufgabe zugrunde, einen Faserkreisel der in Rede stehenden Art anzugeben, der automatisch in der Nähe des Quadraturpunktes arbeitet.

Diese Aufgabe ist gemäß der Erfindung durch die im Patentanspruch 1 angegebenen Merkmale gelöst.

Demgemäß wird ein Achttor-Richtkoppler mit jeweils vier zu Toren führenden Armen zu beiden Seiten des Koppelbereiches verwendet, wobei die Leistungsaufteilung auf die vier Ausgangstore mit einer bestimmten relativen Phasenverschiebung zwischen den Ausgangssignalen des Kopplers erfolgt. Durch solche definierten Phasenbeziehungen zwischen den Ausgangsamplituden des Richtkopplers kann der Arbeitspunkt des Faserkreisels in den Quadraturpunkt gelegt werden.

Der Richtkoppler wird vorzugsweise aus vier Monomode-Fasern hergestellt, die im Koppelbereich aneinander anliegen und durch gleichmäßiges Erwärmen angeschmolzen werden. Vorzugsweise wird hierbei der dadurch entstehende Koppelbereich als bikonischer Taper gezogen. Die Monomode-Fasern können vor dem Anschmelzen im Koppelbereich noch verdrillt werden. Durch diese Maßnahmen, insbesondere die durch das bikonische Ziehen erzeugte Verjüngung der vier Faserkerne im Koppelbereich wird das in den Faserkernen durch Totalreflexion geführte Licht schwächer geführt. Durch eine solche evaneszente Kopplung der in das Mantelgebiet der Lichtleiterfaser hineinlappenden Amplituden bis hin zu den benachbarten Faserkernen erfolgt die gewünschte Verteilung der Energie zwischen den vier Lichtleiterfasern. Die für die gewünschte Arbeitsweise des Faserkreisels im bzw. nahe am Quadraturpunkt wesentliche Eigenschaft des (4 x 4)-Kopplers liegt neben der Leistungsaufteilung auf die vier Ausgänge in einer bestimmten relativen Phasenverschiebung zwischen den Ausgangssignalen des (4 x 4)-Kopplers.

Der Vorteil eines solchen (4 x 4)-Kopplers gegenüber einem bereits bekannten (3 x 3)-Koppler besteht darin, daß das Signal des zusätzlichen Empfängers direkt zur Detektion der Drehrate mitverwendet werden kann, was bei einem (3 x 3)-Koppler nur mit Hilfe eines zusätzlichen (2 x 2)-Kopplers möglich wäre, welcher das in die Lichtquelle zurückgestrahlte Licht zu einem weiteren Empfänger abzweigen würde.

Weitere Ausgestaltungen der Erfindung gehen aus den abhänzigennsprüchen hervor.

Die Erfindung ist in einem Ausführungsbeispiel anhand der Zeichnung näher erläutert. In dieser stellen dar:

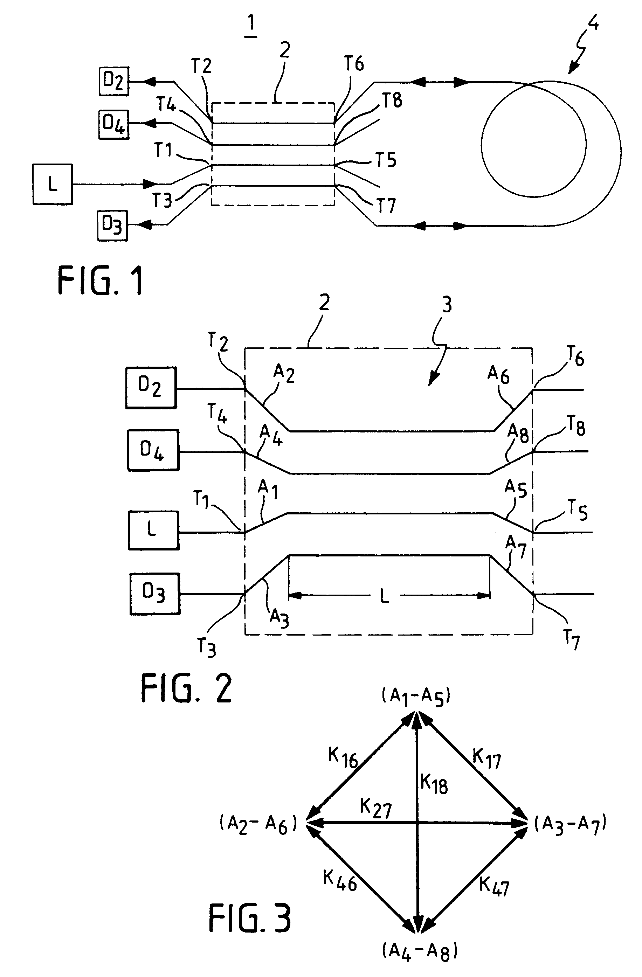

Fig. 1 eine schematische Darstellung eines Faserkreisels gemäß der Erfindung mit einem (4 x 4)-Koppler;

Fig. 2 eine schematische detailliertere Darstellung des (4 x 4)-Kopplers;

Fig. 3 eine schematische Darstellung der Kopplungskonstanten zwischen den einzelnen Armen des in Fig. 2 gezeigten Kopplers;

Fig. 4 eine schematische Darstellung eines bikonisch geformten Kopplers und

Fig. 5 ein Signaldiagramm der Ausgangssignale von Empfängern des Faserkreisels.

Ein Faserkreisel 1 weist einen (4 x 4)-Richtkoppler 2 auf, der an seinen beiden Seiten je vier Tore $T_1$ bis $T_4$ bzw. $T_5$ bis $T_6$ aufweist, deren zugeordnete Arme $A_1$ bis $A_4$ bzw. $A_5$ bis $A_8$ jeweils zu einem Koppelbereich 3 führen, in dem sie miteinander verbunden sind. Mit dem Tor $T_1$ ist eine Lichtquelle L verbunden, die Tore $T_2$, $T_3$ und $T_4$ sind an Empfängerdioden $D_2$, $D_3$ bzw. $D_4$ angeschlossen. Die auf der gegenüberliegenden Seite lie-

genden Tore $T_6$ und $T_7$ sind mit einer Faserspule 4 aus einer langen Monomode-Lichtleiterfaser 5 verbunden. Die Tore $T_5$ und $T_8$ verbleiben frei oder sind mit Überwachungsschaltungen verbunden, mit denen z.B. die Intensität der Lichtquelle überprüft und bei den Meßergebnissen berücksichtigt wird.

Die Lichtquelle L sendet vorzugsweise unpolarisiertes Licht in einem breitbandigen Frequenzbereich aus. Dieses Licht wird in dem Koppelbereich 3 gleichmäßig auf die beiden Tore $T_6$ und $T_7$ aufgeteilt, mit denen die beiden Enden der Faserspule verbunden sind, so daß die aufgespaltenen Lichtanteile die Faserspule 4 gegensinnig durchlaufen. Das Licht tritt nach dem Durchlauf durch die Faserspule 4 wiederum durch die Tore $T_6$ und $T_7$ in den Richtkoppler 2 ein und interferiert in dem Koppelbereich 3. Das Interferenzsignal wird zu den Empfangsdioden $D_2$, $D_3$ und $D_4$ geleitet, aus deren Ausgangssignalen die Drehrate des Faserkreisels bestimmt wird.

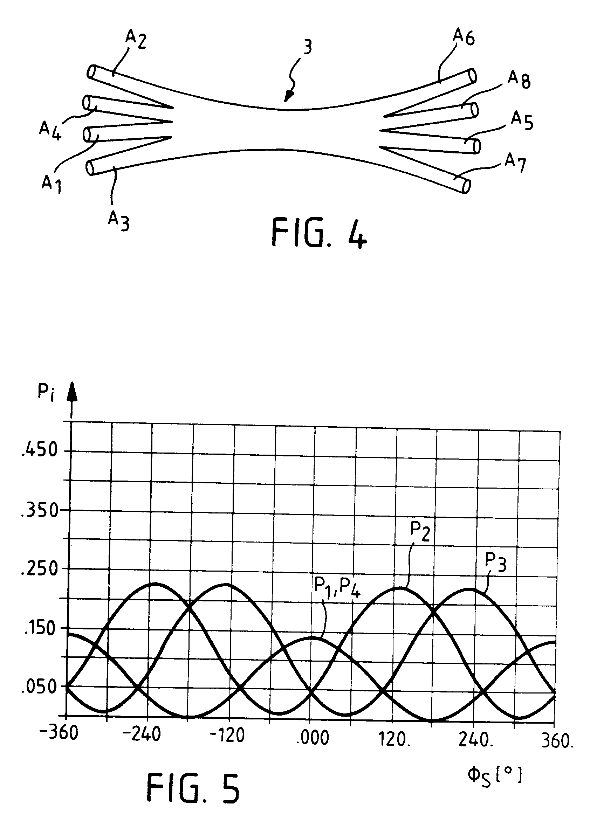

Der Richtkoppler 2 wird z.B. so hergestellt, daß vier Monomode-Lichtleiterfasern im späteren Koppelbereich 3 miteinander verdrillt und vorsichtig erwärmt werden, so daß sie aneinander anschmelzen. Während des Anschmelzens wird die Anordnung so gezogen, daß der Koppelbereich eine bikonische Form entsprechend Fig. 4 erhält, dessen dünnste Stelle in der Mitte des Koppelbereiches 3 liegt. Die vier Lichtleiterfasern zu beiden Enden des verschmolzenen Koppelbereiches bilden dann die Arme $A_1$ bis $A_4$ bzw. $A_5$ bis $A_8$.

Während ein bekannter (3 x 3)-Richtkoppler möglichst symmetrisch aufgebaut sein soll, um hohe Empfindlichkeit für die Messung kleiner Drehraten aufzuweisen, wozu alle drei Kopplungskonstanten gleich groß und die Koppellänge so gewählt wird, daß die Energieaufteilung auf die drei Arme des Richtkopplers jeweils ein Drittel beträgt, muß der (4 x 4)-Richtkoppler 2 gemäß der Erfindung unsymmetrische Leistungsaufteilung aufweisen, damit die Empfangssignale nicht von einer reinen Cosinusfunktion der Sagnac-Phase abhängen. Eine hohe Empfindlichkeit des Faserkreisels 1 für einen Betrieb nahe des Quadraturpunktes, d.h. zum Messen kleiner Drehraten erhält man z.B. für folgende Produkte aus der Koppellänge L des Koppelbereiches 3 und den Kopplungskonstanten $K_{ij}$:

$$K_{16}L = K_{17}L = K_{46}L = K_{47}L = K_{27}L = \text{pi}/6; \quad K_{18}L = \text{pi}/12.$$

Die Indizes i und j der Kopplungskonstanten stimmen mit den Indizes der Tore $T_k$ bzw. der Arme $A_k$ überein, so daß z.B. die Kopplungskonstante $K_{16}$ die Kopplung zwischen den Armen $A_1$ und $A_8$ im Koppelbereich 3 darstellen. Aus diesen Produkten ergeben sich die in Fig. 5 gezeigten Ausgangssignale $P_1$, $P_2$, $P_3$ und $P_4$ an den Toren $T_1$ bis $T_4$, und zwar:

$$P_1 = 0{,}0694 + 0{,}0694 \cos \text{Phi}_S$$
$$P_4 = 0{,}0694 + 0{,}0694 \cos \text{Phi}_S$$
$$P_2 = 0{,}1169 - 0{,}1099 \cos (\text{Phi} + 50{,}8°)$$
$$P_3 = 0{,}1169 - 0{,}1099 \cos (\text{Phi} - 50{,}8°).$$

Man sieht, daß die Ausgangssignale $P_2$ und $P_3$ der Empfangsdioden $D_2$ und $D_3$ um den Wert Null der Drehrate jeweils eindeutig sind, da sie dort einem Sinusverlauf folgen, so daß der Faserkreisel im Quadraturpunkt arbeitet. Das cosinusabhängige Signal $P_4$ kann zur Detektion mitverwendet werden. Die Übertragungsmatrix S, die die Übertragung vom Eingang $e_i$ auf den Ausgang $a_j$ beschreibt, $(i, j = 1 \,...,4)$

$$a_j = \sum_{i=1}^{4} S_{ji} \, e_i$$

hat die folgenden Komponenten:

$$S = \begin{bmatrix} 0,542e^{+j6,6°} & 0,186e^{-j112,5°} & 0,186e^{-j112,5°} & 0,085e^{-j143,5°} \\ 0,186e^{-j112,5°} & 0,421e^{+j9,4°} & 0,206e^{-j119,8°} & 0,186e^{-112,5°} \\ 0,186e^{-j112,5°} & 0,206e^{-j119,8°} & 0,421e^{+j9,4°} & 0,186e^{-j112,5°} \\ 0,085e^{-j143,5°} & 0,186e^{-j112,5°} & 0,186e^{-j112,5°} & 0,542e^{+j6,6°} \end{bmatrix}$$

Es ist demnach wesentlich, daß der Richtkoppler feste, definierte Phasenbeziehungen zwischen seinen Ausgangsamplituden aufweist und nicht etwa lediglich einen Leistungsverteiler ohne feste Phasenbeziehungen darstellt.

**Patentansprüche**

1. Faserkreisel vom Sagnac-Typ mit einer Lichtquelle, einer Faserspule aus einer Lichtleitfaser und einer Empfängeranordnung, die alle mit Toren eines Richtkopplers verbunden sind, derart, daß das Licht der Lichtquelle in die beiden Enden der Faserspule eingespeist wird und diese gegensinnig durchläuft, das aus den Enden der Faserspule austretende Licht in dem Richtkoppler in einem Koppelbereich miteinander interferiert und das Interferenzlicht mit der Empfängeranordnung aufgenommen wird, **dadurch gekennzeichnet,** daß der Richtkoppler (2) ein Monomode-Acht-Tor-Richtkoppler, d.h. ein (4 x 4)-Koppler 2) mit festen Phasenbeziehungen und mit jeweils vier zu Toren ($T_1$ bis $T_4$ bzw. $T_5$ bis $T_8$) führenden Armen ($A_1$ bis $A_4$ bzw. $A_5$ bis $A_5$) zu beiden Seiten des Koppelbereiches (3) ist, und daß die Koppelkonstanten zwischen den einzelnen Armen und die Koppellänge (L) des Koppelbereiches (3) so gewählt sind, daß sich zumindest für zwei Empfänger ($D_2$, $D_3$) eine Arbeitsweise des Faserkreisels (1) in oder annähernd am Quadraturpunkt ergibt.

2. Faserkreisel nach Anspruch 1, **dadurch gekennzeichnet,** daß das Produkt aus Koppellänge (L) und Koppelkonstante ($K_{ij}$) zwischen den einzelnen Armen ($A_i$, $A_j$) des Richtkopplers (2) unterschiedlich gewählt ist, derart, daß die Empfangssignale der Empfänger ($D_2$, $D_3$) nicht von einer reinen Cosinusfunktion abhängen.

3. Faserkreisel nach Anspruch 2, **dadurch gekennzeichnet,** daß die Produkte aus Koppellänge (L) und Koppelkonstante ($K_{ij}$) zwischen den Armen des 4 x 4-Kopplers (2) so gewählt sind, daß die Leistungsaufteilung auf die Ausgangstore ($T_5$ bis $T_8$) bei Einkopplung in eines der Eingangstore ($T_1$ bis $T_4$) ungleichmäßig ist.

4. Faserkreisel nach Anspruch 3, **dadurch gekennzeichnet,** daß das erste Eingangstor ($T_1$) des Richtkopplers (2) mit der Lichtquelle (L) und das zweite, dritte bzw. vierte Eingangstor ($T_2$, $T_3$, $T_4$) mit jeweils einem Empfänger verbunden ist,
daß zwei Tore ($T_6$, $T_7$) der vier Ausgangstore mit den Enden der Faserspule (4) verbunden sind und die anderen Ausgangstore zur freien Verfügung stehen,
daß die Produkte ($K_{16}L$, $K_{17}L$, $K_{46}L$, $K_{47}L$, $K_{27}L$) aus Koppelkonstante ($K_{ij}$) und Koppellänge (L) für die Verbindungen zwischen Lichtquelle (L) und Faserspule (4) zwischen einem der Empfänger ($D_4$) und der Faserspule (4) und zwischen einem weiteren Empfänger ($D_2$) und einem Ende ($T_7$) der Faserspule einen ersten gleichen Wert aufweisen, und
daß das Produkt für die Verbindung zwischen Lichtquelle (L) und einem der frei zur Verfügung stehenden Ausgangstore ($T_8$) einen zweiten Wert aufweist, der vom ersten Wert verschieden ist.

5. Faserkreisel nach Anspruch 4 **dadurch gekennzeichnet**, daß der erste Wert pi/6 und der zweite Wert pi/12 ist.

6. Faserkreisel nach einem der vorhergehenden Ansprüche, **dadurch gekennzeichnet,** daß der Richtkoppler (2) aus vier im Koppelbereich (3) aneinanderliegenden und miteinander verschmolzenen Monomode-Fasern hergestellt ist.

7. Faserkreisel nach Anspruch 6, **dadurch gekennzeichnet,** daß der Koppelbereich (3) bikonisch ausgebildet ist.

8. Faserkreisel nach Anspruch 6 oder 7, **dadurch gekennzeichnet**, daß die Monomode-Fasern vor dem Erwärmen und Verschmelzen des Koppelbereiches (3) miteinander verdrillt werden.

## Claims

1. Fibre gyro of the Sagnac-type having a light source, a fibre coil comprising an optical fibre and a receiver arrangement, which are all connected to gates of a directional coupler so that the light of the light source is fed into both ends of the fibre coil and passes through in opposite directions, the light exiting from the ends of the fibre coil is interfered, relative to each other, in the directional coupler in a coupling region and the interference light is picked up by the receiver arrangement, characterised in that the directional coupler (2) is a monomode-eight-gate directional coupler, i.e. a (4 x 4)-coupler (2), with fixed phase relations and arms ($A_1$ to $A_4$ or $A_5$ to $A_5$ respectively) leading to four respective gates ($T_1$ to $T_4$ or $T_5$ to $T_6$ respectively) on both sides of the coupling region (3), and that the coupling constants between the individual arms and the coupling length (L) of the coupling region (3) are chosen so that for at least two receivers ($D_2$, $D_3$) resulting operation of the fibre gyro (1) is in or near the square point.

2. Fibre gyro according to claim 1, characterised in that the product of coupling length (L) and coupling constant ($K_{ij}$) between the individual arms ($A_i$, $A_j$) of the directional coupler (2) is selected to be different so that the received signals of the receivers ($D_2$, $D_3$) are not dependent on a pure cosine function.

3. Fibre gyro according to claim 2, characterised in that the products of coupling length (L) and coupling constant ($K_{ij}$) between the arms of the 4 x 4-coupler (2) are chosen so that the output distribution to the output gates ($T_5$ to $T_6$) is unequal when coupling into one of the input gates ($T_1$ to $T_4$).

4. Fibre gyro according to claim 3, characterised in that the first input gate ($T_1$) of the directional coupler (2) is connected to the light source (L), and the second, third or fourth input gate ($T_2$, $T_3$, $T_4$) is connected to a respective receiver,

that two gates ($T_6$, $T_7$) of the four output stores are connected to ends of the fibre coil (4) and the other ouput gates are freely available,

that the products ($K_{16}L$, $K_{17}L$, $K_{46}L$, $K_{47}L$, $K_{27}L$) of coupling constant $K_{ij}$) and coupling length (L) for the connections between light source (L) and fibre coil (4) between one of the receivers ($D_4$) and the fibre coil (4) and between a further receiver ($D_2$) and one end ($T_7$) of the fibre coil have a first equal value,

and that the product for the connection between light source (L) and a freely available output gate ($T_8$) has a second value which differs from the first value.

5. Fibre gyro according to claim 4, characterised in that the first value is $\pi/6$, and the second value is $\pi/12$.

6. Fibre gyro according to one of the above claims, characterised in that the directional coupler (2) is composed of four monomode fibres which are adjacent in the coupling region (3) and fused together.

7. Fibre gyro according to claim 6, characterised in that the coupling region (3) is constructed to be bi-conical.

8. Fibre gyro according to claim 6 or 7, characterised in that the monomode fibres are drilled together prior to heating and fusing of the coupling region (3).

## Revendications

1. Gyroscope à fibre optique de type Sagnac, comprenant une source lumineuse, une bobine de fibre optique, et un dispositif récepteur qui sont tous reliés à des portes d'un coupleur directif, de manière à ce que la lumière provenant de la source lumineuse soit amenée aux deux extrémités de la bobine de fibre optique et parcourt celle-ci dans des directions opposées, que la lumière sortant aux extrémités de la bobine de fibre optique interfère dans une zone de couplage du coupleur directif et la lumière d'interférence soit captée par le dispositif récepteur, caractérisé par le fait que le coupleur directif (2) est un coupleur directif monomode à huit portes, c'est-à-dire un coupleur (4 x 4) (2), avec des relations de phase fixes et avec, de part et d'autre de la zone de couplage (3), chaque fois quatre branches ($A_1$ à $A_4$ et $A_5$ à $A_5$) menant à des portes ($T_1$ à $T_4$ et $T_5$ à $T_8$), et que les constantes de couplage entre les différentes branches et la longueur de couplage (L) de la zone de couplage (3) sont choisies telles qu'il en résulte au moins pour deux récepteurs ($D_2$, $D_3$) un mode de fonctionnement du gyroscope à fibre optique (1) dans le point de quadrature ou proche de celui-ci.

2. Gyroscope à fibre optique selon la revendication 1, caractérisé par le fait que le produit de la longueur de couplage (L) et de la constante de couplage ($K_{ij}$) pour les différentes branches ($A_i$, $A_j$) du coupleur directif (2) est choisi de manière à ce que les signaux de réception des récepteurs ($D_2$, $D_3$) ne dépendent pas d'une fonction cosinus pure.

3. Gyroscope à fibre optique selon la revendication 2, caractérisé par le fait que les produits de la longueur de couplage (L) et de la constante de couplage ($K_{ij}$) entre les branches du coupleur 4 x 4 (2) sont choisis tels que, lors du couplage sur l'une des portes d'entrée ($T_1$ à $T_4$), la répartition de puissance sur les portes de sortie ($T_5$ à $T_8$) soit irrégulière.

4. Gyroscope à fibre optique selon la revendication 3, caractérisé par le fait que la première porte d'entrée ($T_1$) du coupleur directif (2) est reliée à la source lumineuse (L) et la deuxième, la troisième et la quatrième porte d'entrée ($T_2$, $T_3$, $T_4$) sont reliées chacune à un récepteur,

que deux portes ($T_6$, $T_7$) des quatre portes de sortie sont reliées aux extrémités de la bobine de fibre optique (4) et les autres portes de sortie sont disponibles,

que les produits ($K_{16}L$, $K_{17}L$, $K_{46}L$, $K_{47}L$, $K_{27}L$,) de la constante de couplage ($K_{ij}$) et de la longueur de couplage (L) pour les liaisons entre la source lumineuse (L) et la bobine de fibre optique (4), entre l'un des récepteurs ($D_4$) et la bobine de fibre optique (4) et entre un autre récepteur ($D_2$) et une extrémité ($T_7$) de la bobine de fibre optique présentent une première valeur identique,

et que le produit pour la liaison entre la source lumineuse (L) et l'une des portes de sortie ($T_8$) disponibles présente une valeur qui diffère de la première valeur.

5. Gyroscope à fibre optique selon la revendication 4, caractérisé par le fait que la première valeur est égale à pi/6 et la deuxième valeur à pi/12.

6. Gyroscope à fibre optique selon l'une des revendications précédentes, caractérisé par le fait que le coupleur directif (2) est fabriqué à partir de quatre fibres monomodes appliquées les unes contre les autres dans la zone de couplage (3) et soudées entre elles.

7. Gyroscope à fibre optique selon la revendication 6, caractérisé par le fait que la zone de couplage (3) a une forme biconique.

8. Gyroscope à fibre optique selon la revendication 6 ou 7, caractérisé par le fait que, avant le chauffage et la fusion de la zone de couplage (3), les fibres monomodes sont torsadées les unes avec les autres.

FIG. 1

FIG. 2

FIG. 3

FIG. 4

FIG. 5